Europäisches Patentamt

European Patent Office

Office européen des brevets

(11) Publication number: **0 339 683 B1**

## EUROPEAN PATENT SPECIFICATION

(45) Date of publication of patent specification: **15.06.94** (51) Int. Cl.⁵: **B01D 53/34**

(21) Application number: **89107811.5**

(22) Date of filing: **28.04.89**

(54) Process for desulphurisation of a sulphur dioxide-containing gas stream.

(30) Priority: **29.04.88 US 188254**

(43) Date of publication of application:
**02.11.89 Bulletin 89/44**

(45) Publication of the grant of the patent:
**15.06.94 Bulletin 94/24**

(84) Designated Contracting States:
**AT BE DE ES FR GB IT NL SE**

(56) References cited:
**EP-A- 0 295 908**
**WO-A-80/01377**
**FR-A- 2 229 450**

(73) Proprietor: **DRAVO LIME COMPANY**
**One Gateway Center**
**Pittsburgh Pennsylvania 15222(US)**

(72) Inventor: **Stowe, Jr., Donald H.**
**909 Second Street,**
**Beaver**
**Pennsylvania 15009(US)**

(74) Representative: **Frankland, Nigel Howard et al**
**FORRESTER & BOEHMERT**
**Franz-Joseph-Strasse 38**
**D-80801 München (DE)**

## Description

THE PRESENT INVENTION relates to a process for the desulphurisation of a sulphur dioxide-containing gas stream.

US-A-3919393 and US-A-3919394 disclose processes for the removal of sulphur dioxide from flue gas. In the described processes a lime slurry scrubbing system is utilized, with specific amounts of magnesium compounds being included in the slurry. This resulted in an improved removal of the sulphur oxides, as compared with prior lime slurry scrubbing systems.

In a lime slurry scrubbing system for a sulphur dioxide-containing gas stream the gas stream is contacted with an aqueous solution of calcium oxide in a wet scrubber to remove sulphur dioxide therefrom.

As mentioned, the prior Specifications disclose processes in which a calcium oxide aqueous slurry containing a specified amount of magnesium compounds was used as the scrubbing medium in a wet scrubbing unit. Whilst the processes described in the prior Specifications work well, and are utilised commercially, problems can be associated with the use of aqueous slurries in wet scrubbing units.

In such slurries, suspended solids are present which have a tendency to accumulate not only in the holding tanks for the slurry, but also in pipelines and nozzles, and this can result in undesired plugging of the pipelines and nozzles. In addition, the prior art processes tend to produce a sludge for disposal and has relatively poor de-watering characteristics, and sufficient de-watering capacity has to be provided in the design of a system using those processes to accommodate the poor de-watering characteristics of the sludge produced.

US-A-4014978 discloses a method for removing sulphur dioxide from the flue gases in which a solution is utilised which contains an excess of calcium bicarbonate or magnesium bicarbonate. Reaction of the sulphur dioxide with the bicarbonate produces a soluble bisulphite. Oxidation of the resultant solution is effected. The oxidised solution is then contacted with an alkaline earth metal carbonate to generate a bicarbonate that is recycled to the scrubbing unit. Precipitated sulphate and other solids are separated from the regenerated bicarbonate solution.

US-A-4193971 discloses a process in which an aqueous slurry containing magnesium hydroxide and gypsum is contacted with a sulphur dioxide-containing gas to fix the sulphur dioxide as magnesium sulphite. The resultant slurry is contacted with an oxidising agent to convert the magnesium sulphite into magnesium sulphate. The aqueous slurry thus obtained is then filtered, and the magnesium sulphate is treated with calcium hydroxide, in the presence of gypsum crystals, which act as seed crystals, to obtain magnesium hydroxide and gypsum. The slurry may then be recycled to the initial step.

The oxidation of effluent from a lime scrubbing process to convert sulphites and bisulphites for the purpose of easy separation from the aqueous medium as precipitated sulphates is a known procedure. US-A-4046856, for example, discloses a method in which a slurry of a calcium compound, such as calcium hydroxide or calcium carbonate, has a soluble magnesium compound added thereto, for reaction with sulphur dioxide in a scrubbing unit, with the effluent from the scrubbing unit being oxidised to form sulphates. Sulphuric acid is also added to the oxidising medium for pH control. The discharge from the oxidiser is passed to a thickener in which gypsum is separated, and the magnesium compounds are returned to the tanks wherein a calcium slurry is formed for passage through the scrubbing unit. The slurry is composed mainly of calcium hydroxide, calcium sulphate and magnesium hydroxide in water.

US-A-4246245 discloses a method in which a gas containing sulphur dioxide is contacted with hydrated lime to remove the sulphur dioxide from the gas. In one embodiment a type S hydrated dolomitic lime is used as a source of magnesium sulphite. This results in the formation of magnesium sulphite-bisulphite. A side stream of the latter is oxidised to magnesium sulphate, and the magnesium sulphate is converted to magnesium hydroxide, which is combined with the wet scrubber effluent to provide magnesium sulphite.

The present invention seeks to provide an improved process for the de-sulphurisation of a sulphur dioxide-containing gas.

According to this invention there is provided a process for the de-sulphurisation of a sulphur dioxide-containing gas, which comprises contacting a sulphur dioxide-containing gas, which comprises contacting a sulphur dioxide-containing gas stream with a recirculating scrubbing medium, in a wet scrubber to remove sulphur dioxide from the gas stream, said scrubbing medium comprising an aqueous solution of magnesium sulphite formed by the reaction of magnesium hydroxide with absorbed sulphur dioxide, the scrubbing medium being substantially devoid of solid calcium salts, subjecting a portion of the spent scrubbing medium to oxidation and then treating the oxidized product with a magnesium-containing lime slurry to obtain magnesium hydroxide and calcium sulphate, separating calcium sulphate from the treated product and recycling the magnesium hydroxide to the scrubber, wherein said scrubbing medium has a magnesium ion content of between about 5,000 to 15,000 parts per million and has a pH of between about 4.5 to about

2

7.5.

The aqueous solution of magnesium hydroxide scrubber may have a preferred pH of about 6.5.

It has been found that the spent scrubbing medium contains magnesium sulphite and magnesium bisulphite, and the magnesium sulphite and magnesium bisulphite are converted by oxidation to magnesium sulphate. Preferably, said spent scrubbing medium has, after oxidation, a pH of between about 3.5 to about 5.5.

Preferably said magnesium-containing lime slurry, which forms the said magnesium-containing lime slurry, contains about 1.5 to about 7 percent by weight of magnesium oxide.

Preferably said magnesium-containing lime contains about 3 percent by weight of magnesium oxide.

It will thus be appreciated that a preferred process in accordance with the present invention is a process for the de-sulphurisation of a sulphur dioxide-containing gas, which process comprises contacting a sulphur dioxide-containing gas stream with a recirculating scrubbing medium comprising an aqueous solution of magnesium sulphite which is substantially devoid of solid calcium salts in a wet scrubber, wherein said aqueous solution has a magnesium ion content of between about 5,000 to about 15,000 parts per million and a pH of about 4.5 to about 7.5, subjecting a portion of the spent scrubbing medium containing magnesium sulphite and magnesium bisulphite to oxidation to convert said magnesium sulphite and said magnesium bisulphite to magnesium sulphate, the oxidation product obtained having a pH between about 3.5 to about 5.5, contacting said oxidation product with a magnesium-containing lime slurry, said magnesium-containing lime slurry containing from about 1.5 to about 7 percent by weight of magnesium oxide, resulting in the regeneration of magnesium hydroxide and the formation of insoluble calcium sulphate, separating the calcium sulphate from the regenerated magnesium hydroxide and then recycling the regenerated magnesium hydroxide to the scrubber.

In order that the invention may be more readily understood, and so that further features thereof may be appreciated, the invention will now be described, by way of example, with reference to the accompanying drawings in which

FIGURE 1 is a schematic illustration of one embodiment of the present invention, and

FIGURE 2 is a schematic illustration of another embodiment of the present invention.

The present invention proposes the use of an aqueous solution of magnesium hydroxide to remove sulphur dioxide from a flue gas stream, in a wet scrubber, with spent solution subsequently being regenerated by the addition of a magnesium-containing lime slurry, after prior oxidation of the spent solution, such that calcium sulphate is formed, which is separated from the slurry, magnesium hydroxide being regenerated in an aqueous solution which is returned to the scrubber.

Wet scrubbing units for the removal of sulphur dioxide from flue gases are known, in which the flue gases are contacted with a counter current flow of a scrubbing liquid, and such a wet scrubbing unit is utilised in the present process. The liquid charged to the wet scrubbing unit is an aqueous solution of magnesium hydroxide. The magnesium hydroxide, in the scrubbing unit, is converted to magnesium sulphite and the magnesium sulphite so formed is further converted, by contact with sulphur dioxide, under the prevailing acidic conditions, to magnesium bisulphite by the general formula

$$MgSO_3 + SO_2 + H_2O = Mg(HSO_3)_2$$

The scrubbing solution should have a magnesium ion content of between about 5,000 to about 15,000 parts per million, with fresh or recycled magnesium hydroxide solution being added to the scrubber to replenish that which is removed for oxidation and regeneration. In the scrubbing unit, the solution of the scrubbing fluid should be at a pH of between about 4.5 to about 7.5 and preferably should have a pH of about 6.5.

The scrubbing fluid is collected in the bottom of the scrubbing unit. A major portion thereof is recycled within the scrubbing unit for contact with further sulphur dioxide-containing gas, and a portion may go for washing of the de-misters, and the remainder of the scrubbing fluid may be withdrawn, as effluent, from the scrubbing unit, so as to remove the sulphur components of magnesium sulphite and bisulphite therefrom, and regenerate magnesium hydroxide for return to the scrubbing unit.

The portion of scrubber effluent that is not recycled or used to wash de-misters is first contacted with an oxidising gas, such as air, for example, at a temperature of about 25° to about 60°C, with an average contact time of about one to about four hours to convert soluble magnesium sulphite and magnesium bisulphite to magnesium sulphate. Such oxidation is characterised by the following equations:-

$$Mg(HSO_3)_2 + \tfrac{1}{2}O_2 = MgSO_4 + 2H^+$$
$$Mg(SO_3) + \tfrac{1}{2}O_2 = MgSO_4$$

The oxidation decreases the pH of the effluent from the initial pH value of the slurry, to a value within the range of about 3.5 to about 5.5. The oxidised solution, which is now a sulphate-containing solution, is then passed to a reagent addition tank for contact with an aqueous slurry containing from about 15 to about 30 weight percent, preferably about 20 to about 25 weight percent of fresh magnesium-containing lime. The magnesium-containing lime used to prepare the aqueous slurry for treatment of the oxidised scrubber effluent should contain about 1.5 to about 7 percent by weight of magnesium oxide, with the balance being calcium oxide. Preferably a magnesium-containing lime having about 3 percent by weight of magnesium oxide is used.

When the magnesium-containing lime is added to the oxidised effluent, the calcium and magnesium species in the lime convert to hydroxide. The hydroxides will basify the oxidised effluent, which initially has a pH of between 3.5 to 5.5, and this results in the formation of insoluble calcium sulphate and magnesium hydroxide. The pH is thus increased to a value of between about 9.0 to about 11.0, and the magnesium sulphate is reactive with calcium hydroxide, which results in the precipitation of calcium sulphate and magnesium hydroxide by the general equation:-

$$MgSO_4 + Ca(OH)_2 = Mg(OH)_2 + CaSO_4 . 2H_2O$$

The amount of magnesium-containing lime required is that amount containing the quantity of calcium stoichiometrically required to react with the magnesium sulphate. The magnesium-containing lime and the oxidised effluent are contacted for a period of time, for example about 3 minutes to about 60 minutes, and at a temperature of about 25° to about 60°C, sufficient to convert the magnesium sulphate to insoluble calcium sulphate and magnesium hydroxide.

A major portion of the magnesium hydroxide is separated from the precipitated calcium sulphate, such as by a cyclone separator, and the magnesium hydroxide is passed to a return tank for recyle to the scrubbing unit. The separated calcium sulphate may be further dewatered by a centrifuge or other separating means prior to discharge as calcium sulphate, while reclaimed magnesium hydroxide suspension therefrom is also passed to a return tank. The reclaimed magnesium hydroxide suspension is then returned to the scrubbing unit for reuse in further scrubbing of sulphur dioxide-containing gas.

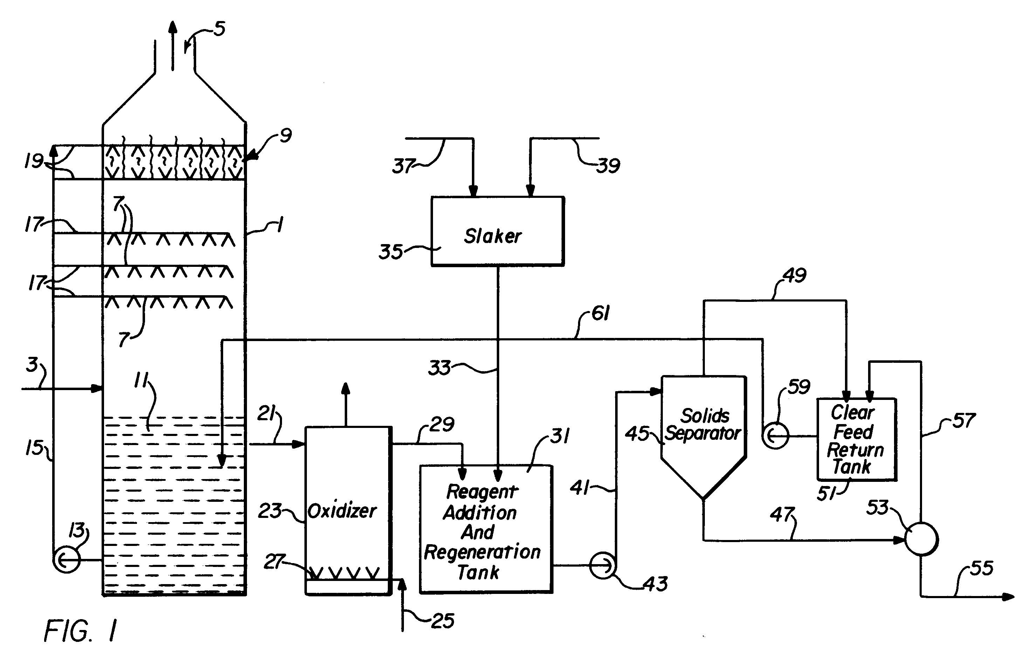

Referring now to Figure 1, an embodiment of the present invention is schematically illustrated. A scrubbing unit 1 has sulphur-containing gases charged thereto through line 3, and cleaned gases, after removal of sulphur-containing components, are discharged at exhaust means 5. A plurality of scrubbing unit sprayers 7 are provided within the scrubber 1, with a demister 9 between the scrubbing unit sprayers 7 and the exhaust means 5. The scrubbing unit 1 collects a supply of scrubbing fluid 11 in the lower portion thereof. A pump 13, in line 15, directs a portion of the supply of scrubbing fluid 11, through line 15 to offtake lines 17 to the scrubbing unit sprayers 7, and offtake lines 19 to the demister 9. Such a scrubbing system for sulphur dioxide-containing combustion gases is conventional and known in the art.

A portion of the scrubbing fluid from the scrubbing unit is treated so as to form and remove calcium components while recycling magnesium components back to the scrubbing unit. Scrubbing fluid is withdrawn from the scrubbing unit 1 through line 21 to an oxidiser 23, wherein the scrubbing fluid is contacted with an oxygen-containing gas, such as air, injected from a source, not shown, through line 25 and a plurality of discharge nozzles 27. Spent gas is removed overhead from oxidiser 23. After the desired contact time in the oxidiser 23, to convert magnesium sulphites and bisulphites of magnesium to magnesium sulphate, in a soluble form, the treated scrubbing fluid is discharged through line 29 to a reagent addition and regeneration tank 31, where the scrubbing liquor, which now comprises mainly magnesium sulphate and a minor amount of calcium sulphate is contacted with an aqueous slurry of magnesium-containing lime. A magnesium-containing lime slurry charged to the regeneration tank 31 through line 33, is formed in slaker 35 by the addition of magnesium-containing lime thereto through line 37, and water through line 39. The amount of water needed is only that sufficient to convert the magnesium and calcium compounds to their corresponding hydroxides and to form the desired aqueous slurry therewith. In the regeneration tank 31, the soluble magnesium sulphate is reacted with calcium hydroxide, which results in precipitation of calcium sulphate and magnesium hydroxide. The regenerated aqueous medium is passed from the regeneration tank 31, through line 41, by means of a pump 43, to a solids separator 45, such as cyclone separator. Solids are discharged from the solids separator through line 47, while the aqueous suspension of magnesium hydroxide is discharged through line 49 to a return tank 51. The solids from line 47 may be further dewatered in a dewatering unit 53, such as a filter, with dewatered solids discharged from the system at line 55, while aqueous solution, or filtrate, from the filter 53 is returned to the clear feed return tank 51 through line 57. From the return tank 51, which contains magnesium hydroxide, scrubbing solution is returned to the scrubber 1, by means of a pump 59, through line 61.

Exemplary of the contents of the process streams in carrying out the process, as illustrated in Figure 1, where gaseous emissions from a 650 Mw boiler are treated to remove sulphur dioxide, are as listed in Table I. In Table I, the gas entering the scrubbing unit is assumed to be at a flow rate of $2.832 \times 10^4 M^3$ per minute ($1 \times 10^6$ ACFM,) and 149°C, and containing the following:-

$H_2O$ - $1.64 \times 10^5$ Kg per hour ($3.623 \times 10^5$ lbs per hour)

$SO_2$ - $2.07 \times 10^4$ Kg per hour ($4.57 \times 10^4$ lbs per hour)

$O_2$ $1.14 \times 10^5$ Kg per hour ($2.515 \times 10^5$ lbs per hour)

$N_2$ - $2.28 \times 10^6$ Kg per hour ($5.024 \times 10^6$ lbs per hour)

HC1 - 84 Kg per hour ($1.857 \times 10^2$ lbs per hour)

$CO_2$ - $6.50 \times 10^5$ Kg per hour ($1.434 \times 10^6$ lbs per hour)

The $SO_2$ content is 2965 ppm.

The clean gas discharged from the srubbing unit contains the following:-

$H_2O$ - $2.99 \times 10^5$ Kg per hour ($6.59 \times 10^5$ lbs per hour)

$SO_2$ - $2.07 \times 10^2$ Kg per hour ($4.57 \times 10^2$ lbs per hour)

$O_2$ - $1.13 \times 10^5$ Kg per hour ($2.50 \times 10^5$ lbs per hour)

$N_2$ - $2.27 \times 10^6$ Kg per hour ($5.02 \times 10^6$ lbs per hour)

HC1 - 4.2 Kg per hour (9.3 lbs per hour)

$CO_2$ - $6.49 \times 10^5$ Kg per hour ($1.432 \times 10^6$ lbs per hour)

The $SO_2$ content is 28 ppm.

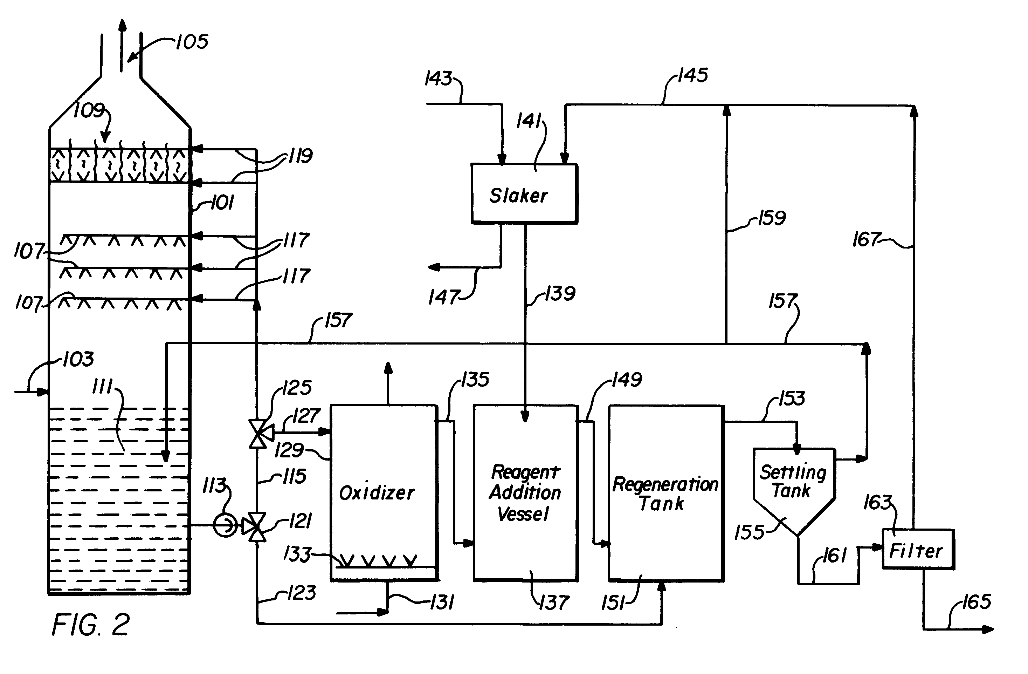

Another embodiment of the present invention is schematically illustrated in Figure 2 wherein a bleed stream of spent scrubbing effluent is oxidised and a second portion used in a regeneration step. A scrubbing unit 101 has sulphur-containing gases charges thereto through line 103, and cleaned gases discharged at exhaust means 105. A plurality of scrubbing unit sprayers 107 are provided, along with a de-mister 109, in the scrubber unit 101. A supply of scrubbing fluid 111 collects in the lower portion of the scrubber unit 101, with a pump 113, in line 115 to offtake lines 117 to the sprayers 107, and offtake lines 119 to the demister 109. A valve 121 is provided in line 115 to direct a second portion of the flow therein through line 123, as hereinafter described. A further valve 125 is provided in line 115 which directs a bleed stream of the flow therefrom, through line 127 to an oxidiser 129. In the oxidiser 129, the bleed stream of scrubber effluent is contacted with an oxygen-containing gas, from a source not shown, through line 131, by means of nozzles or spargers 133. Spent gas is removed overhead from oxidiser 129. After the desired contact time in the oxidiser 129, the bleed stream of scrubber effluent is discharged through line 135 to a reagent addition vessel 137. To the reagent addition vessel there is also charged a magnesium-containing lime slurry through line 139, the magnesium-containing lime slurry being formed in a slaker 141, by addition thereto of magnesium-containing lime through line 143 and aqueous recycle solution through line 145. Gritty material or unslurried magnesium-containing lime may be withdrawn from the slaker 141 through line 147. From the reagent addition vessel 137, the aqueous mixture passes through line 149 to a regeneration tank 151. The second portion of the flow of scrubber effluent, from line 123, is also directed to the regeneration tank 151. After sufficient contact in the regeneration tank 151 to convert sulphites and bisulphites in the aqueous medium to sulphates, with production of calcium sulphate solids as a slurry in an aqueous solution of magnesium bydroxide, the mixture is passed through line 153, to a solids separator such as a settling tank 155 for separation of solids therefrom. The clean magnesium hydroxide solution is then returned to the scrubber unit 102 through line 157. A portion of the clean magnesium hydroxide solution may be directed through branch line 159 to line 145 for use in slaking additional magnesium-containing lime. The wet solids from the settling tank 155 are fed through line 161 to a filter 163. Solids are then discharged from the system through line 165. Filtrate, aqueous magnesium bydroxide solution, from the filter 163 is returned by line 167 to line 145 for use in slaking additional magnesium-containing lime.

Exemplary of the contents of the process streams in carrying out this alternative embodiment of the process, as illustrated in Figure 2, where the gaseous emissions from a 65 Mw boiler are treated to remove sulphur dioxide, are listed in Table II. In Table II, the gas entering the scrubbing unit is that described relative to Table I.

## TABLE I

| Liquor Composition (ppm) | At Valve 13 Line 17 Line 19 Line 21 | Line 29 | Line 33 | Line 41 | Line 47 | Line 49 | Line 55 | Line 57 | Line 61 |
|---|---|---|---|---|---|---|---|---|---|
| Magnesium ($mg^{++}$) | 6000 | 6000 | 50 | 115 | 115 | 115 | 115 | 115 | 115 |
| Calcium ($Ca^{++}$) | 50 | 50 | 300 | 2853 | 2853 | 2853 | 2853 | 2853 | 2853 |
| Total Sulphite | 18465 | 50 | 10 | 10 | 10 | 10 | 10 | 10 | 10 |
| $SO_3$ ($SO_3^=$) | 2046 | 0 | 10 | 10 | 10 | 10 | 10 | 10 | 10 |
| $HSO_3$ ($HSO_3^-$) | 16419 | 50 | 0 | 0 | 0 | 0 | 0 | 0 | 0 |
| Sulphate ($SO_4^=$) | 4000 | 26100 | 1000 | 1880 | 1880 | 1880 | 1880 | 1880 | 1880 |
| Chloride ($Cl^-$) | 4000 | 4000 | 0 | 4000 | 4000 | 4000 | 4000 | 4000 | 4000 |
| $H_2O$ (pounds/hour) | (13) $9.42 \times 10^6$ (21) $2.79 \times 10^6$ | $2.79 \times 10^6$ | $1.76 \times 10^5$ | $2.79 \times 10^6$ | $2.79 \times 10^6$ | $2.51 \times 10^6$ | 31130 | $2.48 \times 10^5$ | $2.75 \times 10^6$ |
| $H_2O$ (Kg/hour) | (13) $4.29 \times 10^6$ (21) $1.26 \times 10^6$ | $1.26 \times 10^6$ | $7.98 \times 10^4$ | $1.35 \times 10^6$ | $1.26 \times 10^6$ | $1.13 \times 10^6$ | 14120 | $1.12 \times 10^5$ | $1.24 \times 10^6$ |
| pH | 6 | 3.5 | 12.5 | 10 | 10 | 10 | 10 | 10 | 10 |
| **Solids Compositions (Kg/hr)** | | | | | | | | | |
| $Ca\ SO_4 \cdot 2H_2O$ | 0 | 0 | 0 | $5.51 \times 10^4$ | $5.51 \times 10^4$ | 0 | $5.51 \times 10^4$ | 0 | 0 |
| $M_g$ ($OH_2$) | 0 | 0 | 1325 | $1.95 \times 10^3$ | $1.32 \times 10^3$ | $1.82 \times 10^4$ | $1.32 \times 10^3$ | 0 | $1.82 \times 10^4$ |
| $Ca\ (OH)_2$ | 0 | 0 | $2.42 \times 10^4$ | 407 | 0 | 407 | 0 | 0 | 407 |
| Total Flow Solids | 0 | 0 | $9.97 \times 10^5$ | $7.51 \times 10^4$ | $5.64 \times 10^4$ | $1.86 \times 10^4$ | $5.64 \times 10^4$ | 0 | $1.86 \times 10^4$ |

### TABLE I (continued)

| | At Valve 13 Line 17 Line 19 Line 21 | Line 29 | Line 33 | Line 41 | Line 47 | Line 49 | Line 55 | Line 57 | Line 61 |
|---|---|---|---|---|---|---|---|---|---|
| **Solids Compositions (lbs/hr)** | | | | | | | | | |
| $Ca\,SO_4 \cdot 2H_2O$ | 0 | 0 | 0 | 121598 | 121598 | 0 | 121598 | 0 | 0 |
| $M_g(OH)_2$ | 0 | 0 | 2922 | 43153 | 2922 | 40231 | 2922 | 0 | 40231 |
| $Ca(OH)_2$ | 0 | 0 | $5.34 \times 10^4$ | 898 | 0 | 898 | 0 | 0 | 898 |
| Total Flow Solids | 0 | 0 | $5.63 \times 10^4$ | 165649 | 124520 | 41129 | 124520 | 0 | 41129 |

EP 0 339 683 B1

EP 0 339 683 B1

TABLE II

| Liquor Composition (ppm) | At Valve 113 Line 127 Line 123 | Recycle to Lines 117 & 119 | Line 135 | Line 139 | Line 149 | Line 153 | Lines 157 & 167 | Lines 161 & 165 |
|---|---|---|---|---|---|---|---|---|
| Magnesium ($M_g^{++}$) | 6000 | 6000 | 6000 | 50 | 115 | 6004 | 6004 | 6004 |
| Calcium ($Ca^{++}$) | 50 | 50 | 50 | 300 | 2853 | 50 | 50 | 50 |
| Total Sulphite | 18465 | 18465 | 50 | 10 | 10 | 14337 | 14337 | 14337 |
| $SO_3$ ($SO_3^{=}$) | 2046 | 2046 | 0 | 10 | 10 | 14287 | 14287 | 14287 |
| $HSO_3$ ($HSO_3^{-}$) | 16419 | 16419 | 50 | 0 | 0 | 50 | 50 | 50 |
| Sulphate ($SO_4^{=}$) | 4000 | 4000 | 26100 | 1000 | 1880 | 3526 | 3526 | 3526 |
| Chloride ($Cl^{-}$) | 4000 | 4000 | 4000 | 0 | 4000 | 4000 | 4000 | 4000 |
| $H_2O$ (pounds/hour) | (113) $2.25 \times 10^7$ (127) $2.79 \times 10^6$ | $9.42 \times 10^6$ | $2.79 \times 10^6$ | $1.76 \times 10^5$ | $2.97 \times 10^6$ | $1.33 \times 10^7$ | (157) $1.32 \times 10^7$ (167) 36123 | (161) 66522 (165) 30399 |
| $H_2O$ (Kg/hour) | (113) $1.02 \times 10^7$ (127) $1.26 \times 10^6$ | $4.27 \times 10^6$ | $1.26 \times 10^6$ | $7.98 \times 10^4$ | $1.34 \times 10^6$ | $6.03 \times 10^6$ | (157) $5.98 \times 10^6$ (107) $1.63 \times 10^3$ | (161) $3.01 \times 10^4$ (165) $1.37 \times 10^4$ |
| pH | 6 | 6 | 3.5 | 12.5 | 10 | 6 | 10 | 10 |
| Solids Composition (Kg/hour) | | | | | | | | |
| $Ca \, SO_4 \cdot 2H_2O$ | 0 | 0 | 0 | 0 | $5.51 \times 10^4$ | $5.51 \times 10^4$ | 0 | $5.51 \times 10^4$ |
| $M_g (OH)_2$ | 0 | 0 | 0 | $1.32 \times 10^3$ | $1.95 \times 10^4$ | 474 | 0 | 474 |
| $Ca (OH)_2$ | 0 | 0 | 0 | $2.42 \times 10^4$ | 407 | 407 | 0 | 407 |
| Total Flow Solids | 0 | 0 | 0 | $9.97 \times 10^4$ | $7.51 \times 10^4$ | $5.60 \times 10^4$ | 0 | $5.60 \times 10^4$ |

## TABLE II (continued)

| | At Valve 113<br>Line 127<br>Line 123 | Recycle to<br>Lines 117 & 119 | Line 135 | Line 139 | Line 149 | Line 153 | Lines 157 & 167 | Lines 161 & 165 |
|---|---|---|---|---|---|---|---|---|
| Solids Composition (lbs/hour) | | | | | | | | |
| $Ca\ SO_4 \cdot 2H_2O$ | 0 | 0 | 0 | 0 | 121598 | 121598 | 0 | 121598 |
| $M_g\ (OH)_2$ | 0 | 0 | 0 | 2922 | 43153 | 1045 | 0 | 1045 |
| $Ca\ (OH)_2$ | 0 | 0 | 0 | $5.34 \times 10^4$ | 898 | 898 | 0 | 898 |
| Total Flow Solids | 0 | 0 | 0 | $5.63 \times 10^4$ | 165649 | 123541 | 0 | 123541 |

## Claims

1. A process for the desulfurisation of a sulphur dioxide-containing gas, which comprises contacting a sulphur dioxide-containing gas stream with a recirculating scrubbing medium in a wet scrubber to remove sulphur dioxide from the gas stream, said scrubbing medium comprising an aqueous solution

9

of magnesium sulphite formed by the reaction of magnesium hydroxide with absorbed sulphur dioxide, the scrubbing medium being substantially devoid of solid calcium salts, subjecting a portion of the spent scrubbing medium to oxidation and then treating the oxidised product with a magnesium-containing lime slurry to obtain magnesium hydroxide and calcium sulphate, separating calcium sulphate from the treated product and recycling the magnesium hydroxide to the scrubber, wherein said scrubbing medium has a magnesium ion content of between about 5,000 to 15,000 parts per million and has a pH of between about 4.5 to about 7.5.

2. The process of Claim 1 wherein said pH is about 6.5.

3. The process of Claim 1 wherein said spent scrubbing medium after oxidation has a pH between about 3.5 to about 5.5.

4. The process of any one of the preceding Claims wherein said magnesium containing lime for making said slurry contains about 1.5 to about 7 weight percent of magnesium oxide.

5. The process of Claim 4 wherein said magnesium-containing lime contains about 3 weight percent of magnesium oxide.

6. The process of Claim 4 or 5 wherein said magnesium-containing lime is contacted with water prior to addition to said oxidised product to obtain the corresponding hydroxides.

**Patentansprüche**

1. Verfahren zur Entschwefelung eines Schwefeldioxid enthaltenden Gases, bei dem ein Schwefeldioxid enthaltender Gasstrom in einem Naßwäscher mit einem umlaufenden Waschmedium in Berührung gebracht wird, um Schwefeldioxid aus dem Gasstrom zu entfernen, wobei das besagte Waschmedium eine wässrige Lösung von Magnesiumsulfit enthält, die durch Reaktion von Magnesiumhydroxid mit absorbiertem Schwefeldioxid gebildet ist, das Waschmedium im wesentlichen keine festen Kalziumsalze enthält, ein Teil des verbrauchten Waschmediums oxidiert wird und dann das oxidierte Produkt mit einem magnesiumhaltigen Kalkschlamm behandelt wird, um Magnesiumhydroxid und Kalziumsulfat zu erhalten, Kalziumsulfat aus dem behandelten Produkt abgetrennt wird und das Magnesiumhydroxid zum Wäscher zurückgeführt wird, wobei das besagte Waschmedium einen Magnesiumionengehalt von etwa 5000 bis 15000 ppm und einen pH-Wert von zwischen etwa 4,5 bis etwa 7,5 aufweist.

2. Verfahren nach Anspruch 1, dadurch gekennzeichnet, daß der besagte pH-Wert etwa 6,5 beträgt.

3. Verfahren nach Anspruch 1, dadurch gekennzeichnet, daß das besagte verbrauchte Waschmedium nach der Oxidation einen pH-Wert von etwa 3,5 bis etwa 5,5 hat.

4. Verfahren nach einem der vorangehenden Ansprüche, dadurch gekennzeichnet, daß der besagte magnesiumhaltige Kalk zum Herstellen des besagten Schlamms etwa 1,5 bis etwa 7 Gew.-% Magnesiumoxid enthält.

5. Verfahren nach Anspruch 4, dadurch gekennzeichnet, daß der besagte magnesiumhaltige Kalk etwa 3 Gew.-% Magnesiumoxid enthält.

6. Verfahren nach Anspruch 4 oder 5, dadurch gekennzeichnet, daß der besagte magnesiumhaltige Kalk vor der Zugabe des besagten Oxidationsprodukts mit Wasser in Kontakt gebracht wird, um die entsprechenden Hydroxide zu erhalten.

**Revendications**

1. Procédé de désulfuration d'un gaz contenant du dioxyde de soufre, qui comprend les étapes consistant à mettre en contact un courant de gaz contenant du dioxyde de souffre avec un agent d'épuration à recycler dans un épurateur par voie humide, pour éliminer le dioxyde de souffre du courant de gaz, ledit agent d'épuration étant constitué d'une solution aqueuse de sulfite de magnésium formée par réaction d'hydroxyde de magnésium avec du dioxyde de souffre absorbé, l'agent d'épuration ne comportant pratiquement pas de sels de calcium solides, à soumettre une partie de l'agent d'épuration utilisé à une oxydation, et ensuite à traiter le produit oxydé avec une boue de chaux contenant du magnésium pour obtenir de l'hydroxyde de magnésium et du sulfate de calcium, à séparer le sulfate de calcium du produit traité et à recycler l'hydroxyde de magnésium dans l'épurateur, dans lequel ledit agent d'épuration a une teneur en ion magnésium comprise entre environ 5 000 et environ 15 000 parties par million et a un pH compris entre environ 4,5 et environ 7,5.

2. Procédé selon la revendication 1 dans lequel ledit pH est d'environ 6,5.

3. Procédé selon la revendication 1 dans lequel l'agent d'épuration utilisé a, après oxydation, un pH compris entre 3,5 et environ 5,5.

4. Procédé selon l'une quelconque des revendications précédentes dans lequel ladite chaux contenant du magnésium destinée à constituer ladite boue contient d'environ 1,5 à environ 7 % en masse d'oxyde de magnésium.

5. Procédé selon la revendication 4, dans lequel ladite chaux contenant du magnésium contient environ 3 % en masse d'oxyde de magnésium.

6. Procédé selon la revendication 4 ou 5, dans lequel ladite chaux contenant du magnésium est mise en contact avec de l'eau avant d'être ajoutée audit produit oxydé pour obtenir les hyroxydes correspon-dants.

FIG. I

EP 0 339 683 B1

FIG. 2